# EUROPEAN PATENT SPECIFICATION

(11) **EP 3 901 552 B1**
(45) Date of publication and mention of the grant of the patent: **07.12.2022**
(21) Application number: 20170989.6
(22) Date of filing: 23.04.2020
(51) Int. Cl.: F28F 3/10

(54) **GASKET ARRANGEMENT, METHOD OF MANUFACTURING A GASKET ARRANGEMENT AND ASSEMBLY**
DICHTUNGSANORDNUNG, VERFAHREN ZUR HERSTELLUNG EINER DICHTUNGSANORDNUNG UND ANORDNUNG
AGENCEMENT DE JOINT D'ÉTANCHÉITÉ, PROCÉDÉ DE FABRICATION D'UN AGENCEMENT DE JOINT D'ÉTANCHÉITÉ ET ENSEMBLE

(43) Date of publication of application: 27.10.2021
(73) Proprietor: Alfa Laval Corporate AB, 221 00 Lund (SE)
(72) Inventor: NYANDER, Anders, 245 91 STAFFANSTORP (SE); GUSTAFSSON, Helén, 245 37 STAFFANSTORP (SE); BERTILSSON, Klas, 241 93 ESLÖV (SE)
(74) Representative: Alfa Laval Attorneys

(56) References cited:
- EP-A1- 2 886 998
- JP-B2- 4 990 224
- US-A- 4 635 715

## Description

### Technical field

The invention relates to a gasket arrangement for a plate heat exchanger, a method of manufacturing such and an assembly comprising such.

### Background art

Plate heat exchangers typically consist of two end plates in between which a number of heat transfer plates are arranged in an aligned manner, i.e. in a stack or pack. The heat transfer plates of a PHE may be of the same or different types and they may be stacked in different ways. In some PHEs, the heat transfer plates are stacked with the front side and the back side of one heat transfer plate facing the back side and the front side, respectively, of other heat transfer plates, and every other heat transfer plate turned upside down in relation to the rest of the heat transfer plates. Typically, this is referred to as the heat transfer plates being "rotated" in relation to each other. In other PHEs, the heat transfer plates are stacked with the front side and the back side of one heat transfer plate facing the front side and back side, respectively, of other heat transfer plates, and every other heat transfer plate turned upside down in relation to the rest of the heat transfer plates. Typically, this is referred to as the heat transfer plates being "flipped" in relation to each other.

The heat transfer plates are typically corrugated so as to comprise ridges extending in an upper plane, and valleys extending in a lower plane. In one type of well-known PHEs, the so called gasketed plate heat exchangers, gaskets are arranged between the heat transfer plates, more particularly in gasket grooves extending along outer edges and around port holes of the heat transfer plates. The gasket grooves may extend in the lower plane and/or in an intermediate plane arranged between the upper and lower planes. The intermediate plane could extend halfway between the upper and lower planes, i.e. be a so-called as half-plane. The end plates, and therefore the heat transfer plates, are pressed towards each other whereby the gaskets seal between the heat transfer plates. The gaskets define parallel flow channels between the heat transfer plates, one channel between each pair of heat transfer plates. Two fluids of initially different temperatures can flow through every second channel for transferring heat from one fluid to the other.

The fluids enter and exit the channels through inlet and outlet ports, respectively, which extend through the PHE and are formed by respective aligned port holes of the heat transfer plates and the gaskets sealing, completely or partly, around the port holes. The inlet and outlet ports communicate with inlets and outlets, respectively, of the PHE for feeding the fluids to and from the PHE.

The gaskets are often marked with information about the gaskets, more particularly information which is common for gaskets of a certain type, such as article number and material of the gaskets. However, the gaskets are not provided with any "dynamic" information, such as batch number, manufacturing date, etc. Instead, the gasket manufacturer typically provides this "dynamic" information on an easily removable label fastened to the gaskets or the gasket packaging. In connection with assembly of the gaskets in a plate heat exchanger, the label is typically separated from the gaskets and lost. This makes it impossible to later trace the gaskets, which is desirable in many situations, for example in connection with claims to be able to find the source of the problem.

US-A-4635715 and EP-A-2886998 disclose a gasket arrangement according to the preamble of claim 1.

JP-B-4990224 discloses a gasket having a RFID tag embedded in the base of the gasket.

### Summary

An object of the present invention is to provide a gasket arrangement for a plate heat exchanger, a method of manufacturing such a gasket arrangement and an assembly comprising such a gasket arrangement, that at least partly solve the issue above. The basic concept of the invention is to provide a gasket with an RFID tag for storing information at a location where it does not impair the sealing function of the gasket and where it can be read by means of an external reader. The gasket arrangement, the method and the assembly for achieving the object above are defined in the appended claims and discussed below.

A gasket arrangement according to the invention is adapted for use in a plate heat exchanger. It comprises a gasket, which is arranged to be positioned between first and second aligned heat transfer plates of the plate heat exchanger with a lower side of the gasket abutting the first heat transfer plate, and an opposing upper side of the gasket abutting the second heat transfer plate. It further comprises a projection projecting from an outside of the gasket. The projection comprises an outer part having a length or longitudinal extension and being arranged to extend outside or beyond the first and second heat transfer plates, and a first connection part, which connects the gasket and the outer part of the projection. The gasket arrangement is characterized in that it further comprises an RFID tag which at least partly is embedded in at least said outer part of the projection.

The outside and an inside of the gasket are opposing and extend between the upper and lower sides of the gasket.

The RFID tag may or may not extend beyond the outer part of the projection, for example also partly in the first connection part.

The RFID tag may or may not be completely embedded in the projection of the gasket arrangement.

In that the gasket arrangement comprises an RFID tag, it can easily be programmed with information of all kinds, also "dynamic", information, such as batch number, which later may be read by means of a suitable external reader, fixedly mounted or hand-held. As an example, the RFID tag may be provided with a unique code, such as a number, which code may be connected to different kinds of information stored in a database. The RFID tag may facilitate full traceability, genuine parts identification, inventory control, etc.

In that the RFID tag is at least partly embedded in the projection of the gasket arrangement, it is not disconnected from the gasket in connection with gasket assembly, but rather follows the gasket, and enables traceability of the same, throughout its life.

The RFID tag may be of any suitable kind, such as of NFC- standard, or UHF-standard having a reading distance of 0,5-1 meter. Thereby, easy reading of the RFID tag with the reader through a packaging containing the gasket arrangement is enabled. Further, when the gasket assembly is mounted in the plate heat exchanger, since the RFID tag is at least partly arranged in the outer part of the gasket arrangement, it will extend outside the first and second heat transfer plate, and thus the complete plate pack of the plate heat exchanger, and not be "shielded" by the plate pack. Thereby, easy reading of the RFID tag with the reader is enabled even when the gasket arrangement is assembled in the plate heat exchanger.

The gasket arrangement may be so designed that a length extension of the outer part of the projection is essentially parallel to a length extension of the RFID tag. This may facilitate embedding of the RFID tag in the outer part of the projection and enable a relatively compact and sleek design of the gasket arrangement. Further, this may extend the reading distance of the RFID tag.

The length extension of the outer part of the projection may be essentially parallel to a length extension of the gasket at the first connection part, i.e. where the first connection part joins the gasket. This may enable a relatively compact and sleek design of the gasket arrangement.

Further, a length extension of the first connection part of the projection may be essentially perpendicular to the length extension of the outer part of the projection. This may enable a relatively material effective design of the gasket arrangement. Further, it may enable a relatively straightforward and conventional design of the first and second heat transfer plates arranged to engage with the gasket arrangement in the plate heat exchanger.

The gasket arrangement may be so designed that the first connection part extends between the gasket and an intermediate portion of the outer part of the projection. This may enable a relatively mechanically robust gasket arrangement which is little prone to tangling.

The projection of the gasket arrangement may have any suitable design and/or function. As an example, it may be designed as a dedicated marking tab which also may be provided with printed or embossed information about the gasket. Alternatively, it may be designed as a means for attaching the gasket to the first heat transfer plate. In accordance therewith, the gasket arrangement may be so designed that the projection further comprises a first finger extending from the outer part of the projection towards the gasket, a free end of the finger facing the gasket. Further, the first connection part and the first finger of the projection may be arranged to engage with opposite sides of the first heat transfer plate to fasten the gasket to the first heat transfer plate. Such a design makes it possible to give the projection of the gasket arrangement one or more functions in addition to the function of accommodating the RFID tag.

The gasket may comprise a first porthole gasket portion arranged to extend around a first porthole of the first heat transfer plate, a second porthole gasket portion arranged to extend around a second porthole of the first heat transfer plate, and an annular gasket portion having an inside which is arranged to define a fluid flow channel between the first and second heat transfer plates. The gasket may further comprise at least one first link gasket portion connecting the first porthole gasket portion and the annular gasket portion, and at least one second link gasket portion connecting the second porthole gasket portion and the annular gasket portion. The projection may project from an outer one of said at least one first link gasket portion. This may enable a positioning of the projection on the gasket having the least possible impact on the sealing function of the gasket.

As an alternative to the above, the gasket may comprise a first porthole gasket portion arranged to extend around a first porthole of the first heat transfer plate, wherein the projection projects from the outside of the first porthole gasket portion. This configuration may be suitable when the gasket consist of the first porthole gasket portion. It may also be suitable when the gasket lacks link gasket portions connecting the porthole gasket portions and the annular gasket portion such that these are separate, which may be the case for gasket adapted for use in semi-welded plate heat exchangers.

As yet an alternative, the gasket may comprise an annular gasket portion an inside of which is arranged to define a fluid flow channel between the first and second heat transfer plates, wherein the projection projects from the outside of the annular gasket portion. This configuration may be suitable when the gasket consist of the annular gasket portion. It may also be suitable when the gasket lacks link gasket portions connecting the porthole gasket portions and the annular gasket portion such that these are separate.

The first and second porthole gasket portions and the annular gasket portion may be made of the same or different materials, irrespective of if they are separate or connected.

A method according to the invention is for manufacturing of a gasket arrangement for a plate heat exchanger, which gasket arrangement includes a gasket and a projection projecting from an outside of the gasket. The method comprises the step of providing the gasket of an elastomeric first material, the step of providing the projection of a second material, and the step of permanently joining the gasket and the projection. The method is characterized in that it further comprises the step of providing an RFID tag at least partly molded into the projection.

The elastomeric first material may be any suitable material, such as rubber, for example EPDM, FKM or NBR.

The second material can be any suitable material, such as a plastic, for example a thermo plastic or a thermosetting plastic, or rubber, for example EPDM, FKM or NBR. If the second material is rubber, this may be vulcanized or plasticized for embedding of the RFID tag. If the second material is a thermo plastic, this may be injection molded around the RFID tag for embedding of the same, or it may be preformed into a "clip" which is snapped around the RFID tag. If the second material is a thermosetting plastic, it may be of one-component type hardened by heat or UV-light, or of two-component type hardened by a chemical reaction, around the RFID tag for embedding of the same.

The gasket and the projection may be manufactured separately before being permanently joined. However, according to one embodiment of the method according to the invention, the step of providing the gasket comprises the sub-step of providing a mold comprising a gasket portion for molding the gasket of the gasket arrangement, the sub-step of arranging at least one blank of the elastomeric first material in the gasket portion of the mold, and the sub-step of applying heat to the mold to achieve the gasket and said permanent joining of the gasket and the projection. According to this embodiment the projection may be separately manufactured before being permanently joined with the gasket in connection with the molding of the gasket.

According to another embodiment of the method according to the invention, the steps of providing the gasket and the projection comprise the sub-step of providing a mold, which comprises a gasket portion for molding the gasket of the gasket arrangement, and a projection portion projecting from an outside of the gasket portion for molding the projection of the gasket arrangement, the sub-step of arranging the RFID tag in the projection part of the mold, the sub-step of arranging at least one blank of the elastomeric first material in the gasket portion of the mold, and at least one blank of the second material in the projection portion of the mold, and the sub-step of applying heat to the mold to achieve the gasket, the projection, the RFID tag at least partly molded into the projection, and said permanent joining of the gasket and the projection. According to this embodiment the gasket and the projection are manufactured simultaneously and integrally formed.

The elastomeric first material and the second material may be different materials. However, according to one embodiment of the inventive method the first material and the second material is the same material, which is an elastomeric material. This may facilitate the permanent joining of the projection and the gasket.

The steps and sub-steps of the methods above need not be performed in the specific order given above, but could be performed in other orders.

An assembly according to the invention comprises a first heat transfer plate and a gasket arrangement as described above. The first heat transfer plate comprises a groove accommodating the gasket and the outer part of the projection extends outside the first heat transfer plate.

The above discussed advantages of the different embodiments of the gasket arrangement according to the invention are naturally transferable to the different embodiments of the method and the assembly according to the invention.

Still other objectives, features, aspects and advantages of the invention will appear from the following detailed description as well as from the drawings.

### Brief description of the drawings

The invention will now be described in more detail with reference to the appended schematic drawings, in which
Fig. 1 schematically illustrates an assembly, i.e. a heat transfer plate and a gasket arrangement placed on top of the heat transfer plate,
Fig. 2 schematically illustrates abutting outer edges of adjacent heat transfer plates in a plate pack, as seen from the outside of a long side of the plate pack,
Fig. 3 schematically illustrates a cross section of a sealing portion of the gasket in Fig. 1,
Fig. 4 contains an enlargement of a first part of the gasket arrangement in Fig. 1 and illustrates a first embodiment of the invention,
Fig. 5 contains an enlargement of a second part of the gasket arrangement in Fig. 1 and illustrates a second embodiment of the invention,
Fig. 6 schematically illustrates proper engagement between the heat transfer plate and the gasket arrangement in Fig. 1, and
Fig. 7 schematically illustrates an RFID tag.

### Detailed description

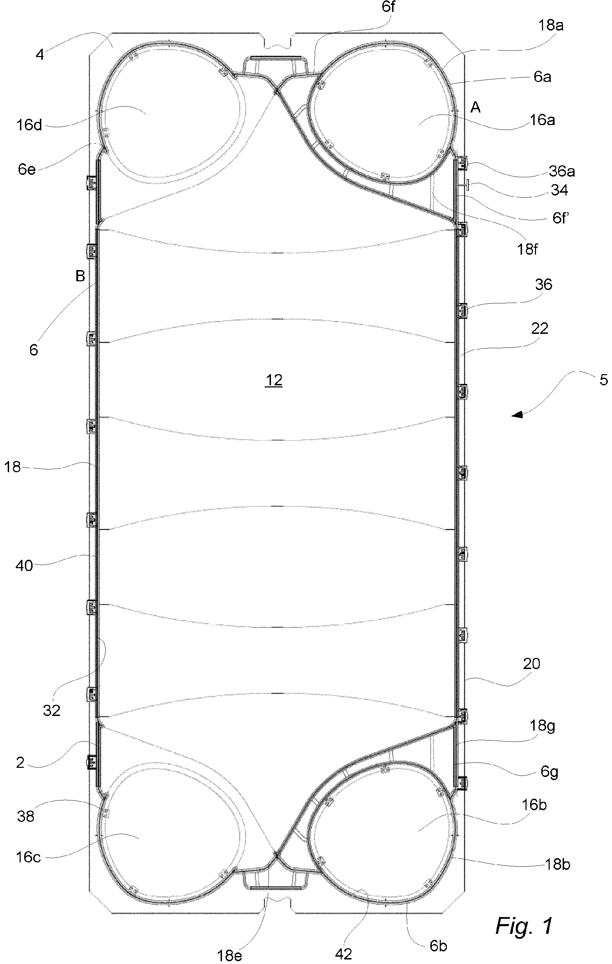

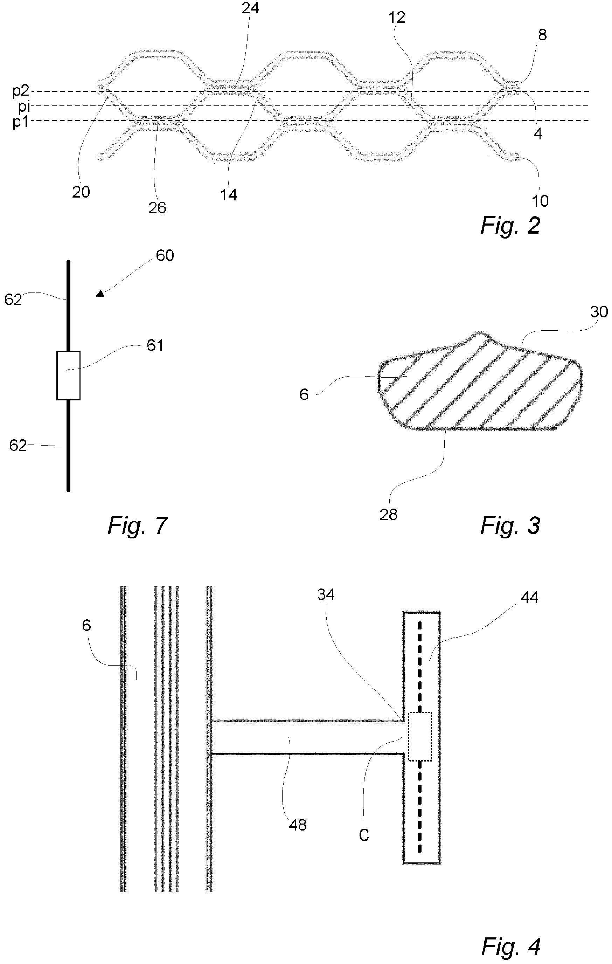

In Fig. 1 a gasket arrangement 2 and a first heat transfer plate 4 for a plate heat exchanger (not illustrated) are shown. The gasket arrangement 2 and the first heat transfer plate 4 constitute an assembly 5. The gasket arrangement 2 comprises a rubber gasket 6. The first heat transfer plate is essentially rectangular and made of stainless steel. In the plate heat exchanger, the first heat transfer plate 4 is arranged between a second heat transfer plate 8 (illustrated in Fig. 2) and a third heat transfer plate 10 (illustrated in Fig. 2), and the gasket 6 seals between the first heat transfer plate 4 and the second heat transfer plate 8. In the plate heat exchanger, the first, second and third heat transfer plates form part of a plate pack. The plates in the plate pack are all of the same type, but in alternative embodiments they could be of different types. Further, with reference to the section of the text describing the background of the invention, the heat transfer plates in the plate pack are "rotated" in relation to each other, but in alternative embodiments they could instead be "flipped" in relation to each other.

The first heat transfer plate 4 comprises (Figs. 1 and 2) a first side 12, an opposing second side 14 and first, second, third and fourth portholes 16a-d arranged in a respective corner of the first heat transfer plate 4. The first heat transfer plate 4 further comprises a groove 18 on the first side 12 for receiving the gasket 6. First and second porthole groove portions 18a and 18b, respectively, of the groove 18 extend completely around a respective one of the first and second portholes 16a and 16b. An annular groove portion 18e of the groove 18 extends along an outer edge 20 of the first heat transfer plate 4 and on the inside of the first and second porthole groove portions 18a and 18b, respectively, of the groove 18. A plurality of first link groove portions 18f, here 7, of the groove 18 extend between the first porthole groove portion 18a and the annular groove portion 18e, while a plurality of second link groove portions 18g, here 7, of the groove 18 extend between the second porthole groove portion 18b and the annular groove portion 18e.

Different areas of the first heat transfer plate 4 are provided with different corrugation patterns (not illustrated in Fig. 1), and the corrugation pattern within a specific plate area is adapted to the main function of this plate area. For example, with reference to Figs. 1, 2 and 6, an outer edge portion 22 of the first heat transfer plate 4 is provided with a strengthening corrugation extending along most of the outer edge 20 of the first heat transfer plate 4 so as to give it a wave-shape. This corrugation, which comprises alternately arranged ridges 24 and valleys 26 as seen from the first side 12 of the heat transfer plate 4, and also corrugations within other areas of the heat transfer plate 4, extend between and in an imaginary first plane p1 and an imaginary second plane p2. A bottom of the gasket groove 18 extends in the first plane p1. An imaginary intermediate plane pi arranged halfway between, and parallel to, the imaginary first and second planes p1 and p2 defines the border between the ridges 24 and the valleys 26 within the outer edge portion 22 of the first heat transfer plate 4.

Since the first, second and third heat transfer plates are all of the same kind, the above description of the first heat transfer plate 4 is valid also for the second and third heat transfer plates 8 and 10.

In the plate heat exchanger, the first side 12 of the first heat transfer plate 4 faces the second heat transfer plate 8, while the second opposing side 14 of the first heat transfer plate 4 faces the third heat transfer plate 10. Arranged like that, corrugations of the first heat transfer plate 4 abut corrugations of the second and third heat transfer plates 8 and 10. Simultaneously, the gasket 6 is accommodated in the gasket grooves of, and compressed between, the first and second heat transfer plates 4 and 8, with a lower side 28 of the gasket 6 (Fig. 3) facing the first heat transfer plate 4 and an upper side 30 (Fig. 3) of the gasket 6 facing the second heat transfer plate 8. A similar gasket is correspondingly arranged, and compressed between, the first and third heat transfer plates. 4 and 10

To fit in the groove 18, the gasket 6 comprises, with reference to Fig. 1, first and second porthole gasket portions 6a and 6b, respectively, arranged to be received in the first and second porthole groove portions 18a and 18b, respectively, an annular gasket portion 6e arranged to be received in the annular groove portion 18e, a plurality of first link gasket portions 6f, here 7, arranged to be received in a respective one of the first link groove portions 18f, and a plurality of second link gasket portions 6g, here 7, arranged to be received in a respective one of the second link groove portions 18g. Thus, in the plate heat exchanger, the first and second porthole gasket portions 6a and 6b of the gasket 6 are arranged to surround a respective one of the first and second portholes 16a and 16b of the first heat transfer plate 4 and a respective one of the portholes of the second heat transfer plate 8, while an inside 32 of the annular gasket portion 6e of the gasket 6 is arranged to define a fluid flow channel between the first and second heat transfer plates 4 and 8. The first and second link gasket portions 6f and 6g are non-sealing portions of a reduced height connecting the first and second porthole gasket portions 6a and 6b and the annular gasket portion 6e. It alternative embodiments these non-sealing gasket portions may be of the same height as the rest of the gasket.

Besides the rubber gasket 6 the gasket arrangement 2 comprises rubber projections in the form of a marking tab 34, outer gasket attachment means 36 and inner gasket attachment means 38. The marking tab 34 and the outer gasket attachment means 36 project from an outside 40 of the gasket 6, while the inner gasket attachment means 38 project from an inside 42 of the first and second porthole gasket portions 6a and 6b, and the inside 32 of the annular gasket portion 6e, of the gasket 6.

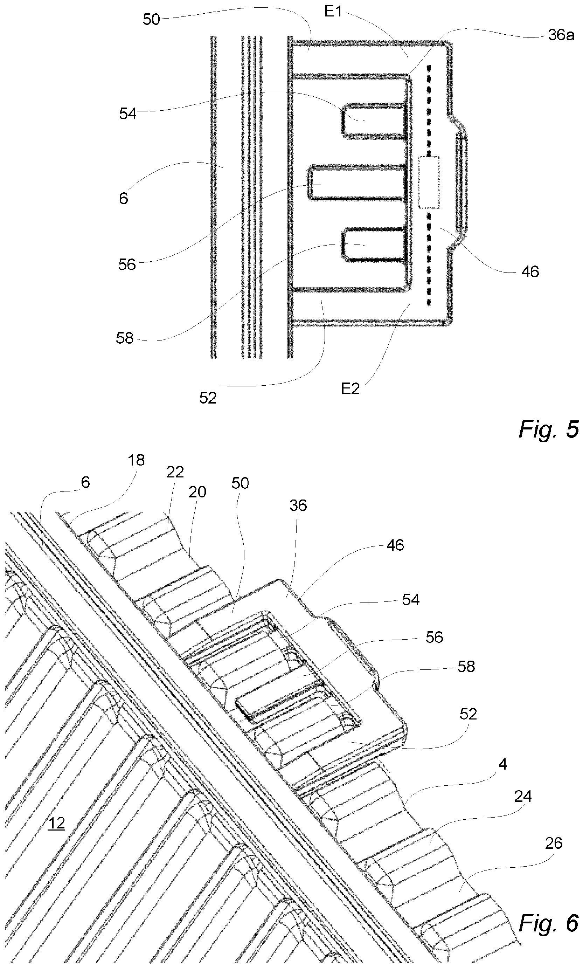

The marking tab 34 and a first one 36a of the outer gasket attachment means 36 project from an outer one 6f' of the first link gasket portions 6f and are illustrated in more detail in Figs. 4 and 5, respectively. Each of the marking tab 34 and the first outer gasket attachment means 36a comprises an outer part or bridge 44 and 46, respectively, and a first connection part 48 and 50, respectively. The first connection parts 48 and 50 are arranged to connect the outer parts 44 and 46 to the gasket 6. The first connection parts 48 and 50 extend from the gasket 6 essentially perpendicular to a length extension of the gasket 6 where the first connection parts 48 and 50 join the gasket 6. Further, a respective length extension of the outer parts 44 and 46 is essentially parallel to the length extension of the gasket 6 where the first connection parts 48 and 50 join the gasket 6. As is clear from Figs. 1 and 4-6, the first connection parts 48 and 50 have such a length that the outer parts 44 and 46 are arranged to extend just outside the first heat transfer plate 4 and, thus, the plate pack of the plate heat exchanger.

The first connection part 48 of the marking tab 34 connects to an intermediate or center portion C of the outer part 44 of the marking tab 34, while the first connection part 50 of the outer gasket attachment means 36a connects to a first end portion E1 of the outer part 46 of the outer gasket attachment means 36a. The outer gasket attachment means 36a further comprises a second connection part 52 arranged to connect the outer part 46 to the gasket 6. The second connection part 52 extend essentially parallel to, and have a similar length as, the first connection part 50. The second connection part 52 of the outer gasket attachment means 36a connects to a second end portion E2 of the outer part 46 of the outer gasket attachment means 36a. Finally, the outer gasket attachment means 36a comprises first, second and third fingers 54, 56 and 58, respectively, extending, essentially parallel to the first and second connection parts 50 and 52, from the outer part 46 of the outer gasket attachment means 36a towards the gasket 6.

All the outer gasket attachment means 36 are configured according to the above description of the outer gasket attachment means 36a. They are arranged to engage with the first heat transfer plate 4 to attach the gasket 6 thereto. In Fig. 6 the engagement between the first heat transfer plate 4 and one of the outer gasket attachment means 36 is illustrated, but all of the outer gasket attachment means 36 engage in a similar way with the first heat transfer plate 4. When the outer gasket attachment means 36 properly engage with the first heat transfer plate 4, the first and second connection parts 50 and 52 and the second finger 56 are arranged in a respective one of the valleys 26 of the outer edge portion 22, the first and third fingers 54 and 58 are arranged under a respective one of the ridges 24 of the outer edge portion 22, and the outer part 46 extends outside the first heat transfer plate 4, essentially parallel to the outer edge 20 thereof. Accordingly, the first and second connection parts 50 and 52 and the second finger 56 of the outer gasket attachment means 36 will engage with the first side 12 of the first heat transfer plate 4, while the first and third fingers 54 and 58 of the outer gasket attachment means 36 will engage with the opposing second side 14 (Fig. 2) of the first heat transfer plate 4, to fasten the gasket 6 to the first heat transfer plate 4.

When the gasket arrangement 2 is properly fastened to the first heat transfer plate 4, the gasket 6 is arranged in the groove 18, the outer gasket attachment means 36 all engage with the first heat transfer plate 4 as described above, the inner gasket attachment means 38 all engage with porthole edges of the first heat transfer plate 4 in not further described way, the first connection part 48 of the marking tab 34 is arranged in one of the valleys 26 of the outer edge portion 22 of the first heat transfer plate 4, and the outer part 44 of the marking tab 34 extends outside the first heat transfer plate 4, essentially parallel to the outer edge 20 thereof.

The gasket arrangement 2 further comprises an RFID tag 60 of UHF-standard which is illustrated in Fig. 7. Figs. 4 and 5 illustrate two possible positions for the RFID tag 60, and, thus, two different embodiments of the gasket arrangement 2 according to the invention. In Fig. 4 the RFID tag 60 is arranged in the outer part 44 of the marking tab 34, and in Fig. 5 the RFID tag 60 is arranged in the outer part 46 of the first outer gasket attachment means 36a. In both embodiments, the RFID tag 60 is embedded in the rubber and not visible from the outside, and, therefore, illustrated with ghost lines in Figs. 4 and 5. Further, in both embodiments, a length extension of the RFID tag 60, and especially a longitudinal center axis of two antennas 62 extending from a chip 61 thereof (Fig. 7), is essentially parallel to the length extension of the outer part 44 and 46, respectively. The antennas 62 have been illustrated with solid lines in the figures even if they in reality are formed as spirals extending around the longitudinal center axis of the antennas.

A mold (not illustrated), which comprises a gasket portion for molding the gasket 6 and projection portions for molding the marking tab 34, the outer gasket attachment means 36 and the inner gasket attachment means 38, is used to manufacture the gasket arrangement 2. The mold is a conventional mold comprising two opposite parts pressed against each other to define the mold cavity, and it is not described in further detail herein. The projection portions for molding the marking tab 34 and the outer gasket attachment means 36 project from an outside of the gasket portion, while the projection portions for molding the inner gasket attachment means 38 project from an inside of the gasket portion. In a first step, the RFID tag 60 is arranged in an outer portion of the projection portion for molding the marking tab 34, or in an outer portion of the projection portion for molding the first outer gasket attachment means 36a, depending on whether a gasket arrangement according to Fig. 4 or Fig. 5 is to be manufactured. In a second step, the gasket and projection portions of the mold are filled with blanks of rubber. In a third step, the mold is heated to plasticize or vulcanize the blanks of rubber and achieve the gasket arrangement. In connection therewith, plasticized or vulcanized rubber encapsulates the RFID tag 60 which thereby becomes embedded in the marking tab 34 or the first outer gasket arrangement 36a. After forming, the gasket arrangement is removed from the mold in one piece.

Either the RFID tag is pre-programmed with a random number when received by the gasket manufacturer, or the gasket manufacturer programs the RFID tag with a random number. The random number should have a minimal chance of repetition or interference with other systems. For example, the random number could be generated by means of the UUID4 technology. The random number is paired with the corresponding manufacturing batch number in a data base, which batch number, in turn, provides information on article number, material quality, manufacturing date, manufacturing parameters, etc. At a later stage, the RFID tag 60 of the gasket arrangement 2 can be read by means of a suitable reader to access all this information for full traceability of the gasket arrangement throughout its product life cycle. For example, this could facilitate claims handling. The random number may also be paired with additional information, like information on the customer who has bought the gasket arrangement, identity of the plate heat exchanger containing the gasket arrangement, installation date, plate heat exchanger operation parameters, etc., which information may be updated if required. Such additional information could be used to make digital twins of plate heat exchangers and facilitate and predict service and maintenance of them.

The above described embodiments of the present invention should only be seen as examples. A person skilled in the art realizes that the embodiments discussed can be varied in a number of ways without deviating from the inventive conception.

As an example, the first outer gasket attachment means 36a and the marking tab 34 need not be positioned as illustrated in Fig. 1 but can have other positions. For example, the first outer gasket attachment means 36a and the marking tab 34 could instead project from the other outer one of the first link gasket portions 6f, or from a bridge portion of the gasket 6 adapted to be positioned below a center recess of the first heat transfer plate 4, which bridge portion is illustrated in Fig. 1. As another example, the first outer gasket attachment means 36a and the marking tab 34 could instead project from a sealing portion of the gasket, such as from the first porthole gasket portion 6a, for example at 'A' in Fig. 1, or from the annular gasket portion 6e, for example at 'B' in Fig. 1. Naturally, the gasket arrangement could also comprise two marking tabs housing a respective RFID tag; for example one marking tab projecting from the first porthole gasket portion 6a and one marking tab projecting from the annular gasket portion 6e. Such an embodiment could allow separate traceability of the first porthole gasket portion and the annular gasket portion.

Instead of being embedded solely in the outer portion of a projection as described above, the RFID tag could be embedded also in the first connection part of the projection, with the length extension of the RFID tag being essentially parallel to the length extension of the first connection part or not.

The RFID tag need not be designed as described above and illustrated in the drawings but could have any suitable design. As an example, the antennas need not be formed as three dimensional spirals but could extend, in any suitable way, in a plane. As an example, the antennas could extend from opposite sides of the chip with a wave-shape. As another example, the antennas could extend one or more turns around the chip, and the turns could have any shape, such as a round or a polygonal shape. Further, the RFID tag could comprise more or less than two antennas, and the chip may have any suitable design. Finally, the RFID tag may be comprised in a label and thus provided on a support which may be embedded in the projection.

The length extension of the outer part of the projection need not extend essentially perpendicular to the length extension of the first connection part of the projection, but could instead extend essentially parallel thereto to form a "prolongation" of the first connection part.

The first outer gasket attachment means 36a need not be designed as illustrated in the figures but could have other designs. For example, the first outer gasket attachment means could be designed according to US patent 4,635,715 or US patent 10,451,361.

All the outer gasket attachment means may, or may not, have a similar design.

The gasket assembly illustrated in Fig. 1 is adapted for use in a plate heat exchanger of parallel flow type which means that the first and second porthole gasket portions 6a and 6b are arranged on the same side of a longitudinal center axis of the gasket arrangement. Naturally, the present invention is equally applicable in connection with a plate heat exchanger of diagonal flow type and the first and second porthole gasket portions 6a and 6b arranged on opposite sides of a longitudinal center axis of the gasket arrangement. Further, the present invention is also applicable in connection with other types of plate heat exchangers, such as fresh water generators having portholes arranged along a longitudinal center axis of the plate heat exchanger.

The complete gasket arrangement need not be molded in one single step. For example, the marking tab including the RFID tag could be molded in a first step, and the rest of the gasket arrangement could be molded in a second step. Then, the pre-molded marking tab, including the RFID tag, could be arranged in the mold for making the gasket arrangement and be "automatically" bonded to the gasket in connection with molding of the rest of the gasket arrangement. Alternatively, the marking tab, including the RFID tag could be molded in a separate mold, and the rest of the gasket could be molded in a separate mold, and then the marking tab and the rest of the gasket arrangement could be connected in a separate step. Naturally, corresponding alternative manufacturing methods are possible with the RFID tag instead arranged embedded in the first outer gasket attachment means.

The RFID tag need not be molded into the marking tab or the first outer gasket attachment means by letting plasticized or vulcanized rubber or other material encapsulate the RFID tag. According to an alternative manufacturing method, an incision is made in the marking tab or the first outer gasket attachment means after molding, and the RFID tag is inserted through this incision.

The complete or a part of the gasket arrangement could be made of another material than rubber. Similarly, the heat transfer plates could be made of another material than stainless steel, such as titanium or aluminum.

The above described heat transfer plates are so designed that the gasket groove and the valleys within the outer edge portion are in the same plane. Naturally, the present invention is equally applicable in connection with heat transfer plates of other designs, for example heat transfer plates comprising gasket grooves arranged in half-plane.

Finally, the present invention could be used in connection with other types of plate heat exchangers than purely gasketed ones, e.g. plate heat exchangers comprising partly/only permanently joined heat transfer plates, such as welded and semi-welded heat exchangers.

It should be stressed that a description of details not relevant to the present invention has been omitted and that the figures are just schematic and not drawn according to scale. It should also be said that some of the figures have been more simplified than others. Therefore, some components may be illustrated in one figure but left out in another figure. Finally, as used herein, the prefixes "first", "second", "top", "bottom", "upper", "lower", "horizontal", "vertical" etc. are used only to distinguish between different components and pose no requirements as regards relative positioning or orientation.

## Claims

1. A gasket arrangement (2) for a plate heat exchanger comprising a gasket (6), which is arranged to be positioned between first and second aligned heat transfer plates (4, 8) of the plate heat exchanger with a lower side (28) of the gasket (6) abutting the first heat transfer plate (4) and an opposing upper side (30) of the gasket (6) abutting the second heat transfer plate (8), and a projection (34, 36a) projecting from an outside (40) of the gasket (6), which projection (34, 36a) comprises an outer part (44, 46) having a length extension and being arranged to extend outside the first and second heat transfer plates (4, 8), and a first connection part (48, 50), connecting the gasket (6) and the outer part (44, 46) of the projection (34, 36a), **characterized in that** it further comprises an RFID tag (60) which at least partly is embedded in at least said outer part (44, 46) of the projection (34, 36a).

2. A gasket arrangement (2) according to claim 1, wherein the length extension of the outer part (44, 46) of the projection (34, 36a) is essentially parallel to a length extension of said RFID tag (60).

3. A gasket arrangement (2) according to any of the preceding claims, wherein the length extension of the outer part (44, 46) of the projection (34, 36a) is essentially parallel to a length extension of the gasket (6) at the first connection part (48, 50).

4. A gasket arrangement (2) according to any of the preceding claims, wherein a length extension of the first connection part (48, 50) of the projection (34, 36a) is essentially perpendicular to the length extension of the outer part (44, 46) of the projection (34, 36a).

5. A gasket arrangement (2) according to any of the preceding claims, wherein the first connection part (48) extends between the gasket (6) and an intermediate portion (C) of the outer part (44) of the projection (34).

6. A gasket arrangement (2) according to any of the preceding claims, wherein the projection (36a) further comprises a first finger (54) extending from the outer part (46) of the projection (36a) towards the gasket (6), wherein the first connection part (50) and the first finger (54) of the projection (36a) are arranged to engage with opposite sides (12, 14) of the first heat transfer plate (4) to fasten the gasket (6) to the first heat transfer plate (4).

7. A gasket arrangement (2) according to any of the preceding claims, wherein the gasket (6) comprises a first porthole gasket portion (6a) arranged to extend around a first porthole (16a) of the first heat transfer plate (4), a second porthole gasket portion (6b) arranged to extend around a second porthole (16b) of the first heat transfer plate (4), an annular gasket portion (6e) an inside (32) of which is arranged to define a fluid flow channel between the first and second heat transfer plates (4, 8), at least one first link gasket portion (6f) connecting the first porthole gasket portion (6a) and the annular gasket portion (6e), and at least one second link gasket portion (6g) connecting the second porthole gasket portion (6b) and the annular gasket portion (6e), wherein the projection (34, 36a) projects from an outer one (6f') of said at least one first link gasket portion (6f).

8. A gasket arrangement (2) according to any of claims 1-6, wherein the gasket (6) comprises a first porthole gasket portion (6a) arranged to extend around a first porthole (16a) of the first heat transfer plate (4), wherein the projection (34, 36a) projects from the outside (40) of the first porthole gasket portion (6a).

9. A gasket arrangement (2) according to any of claims 1-6, wherein the gasket (6) comprises an annular gasket portion (6e) an inside (32) of which is arranged to define a fluid flow channel between the first and second heat transfer plates (4, 8), wherein the projection (34, 36a) projects from the outside (40) of the annular gasket portion (6e).

10. A method of manufacturing a gasket arrangement (2) for a plate heat exchanger, which gasket arrangement (2) includes a gasket (6) and a projection (34, 36a) projecting from an outside (40) of the gasket (6), comprising providing the gasket (6) of an elastomeric first material,
providing the projection (34, 36a) of a second material, and
permanently joining the gasket (6) and the projection (34, 36a),
**characterized in** further comprising
providing an RFID tag (60) at least partly molded into the projection (34, 36a).

11. A method according to claim 10, wherein the step of providing the gasket (6) comprises
providing a mold comprising a gasket portion for molding the gasket (6) of the gasket arrangement (2),
arranging at least one blank of the elastomeric first material in the gasket portion of the mold,
and
applying heat to the mold to achieve the gasket (6) and said joining of the gasket (6) and the projection (34, 36a).

12. A method according to claim 10, wherein the steps of providing the gasket (6) and the projection (34, 36a) comprise
providing a mold comprising a gasket portion for molding the gasket (6) of the gasket arrangement (2), and a projection portion projecting from an outside of the gasket portion for molding the projection (34, 36a) of the gasket arrangement (2),
arranging the RFID tag (60) in the projection part of the mold, arranging at least one blank of the elastomeric first material in the gasket portion of the mold, and at least one blank of the second material in the projection portion of the mold, and
applying heat to the mold to achieve the gasket (6), the projection (34, 36a), the RFID tag (60) at least partly molded into the projection (34, 36a), and said joining of the gasket (6) and the projection (34, 36a).

13. A method according to any of claims 10-12, wherein the elastomeric first material and the second material is the same material.

14. An assembly (5) comprising a first heat transfer plate (4) and a gasket arrangement (2) according to any of claims 1-9, wherein the first heat transfer plate (4) comprises a groove (18) accommodating the gasket (6) and the outer part (44, 46) of the projection (34, 36a) extends outside the first heat transfer plate (4).

## Patentansprüche

1. Dichtungsanordnung (2) für einen Plattenwärmetauscher, umfassend eine Dichtung (6), die so angeordnet ist, dass sie zwischen einer ersten und einer zweiten fluchtenden Wärmeübertragungsplatte (4, 8) des Plattenwärmetauschers positioniert ist, wobei eine untere Seite (28) der Dichtung (6) an der ersten Wärmeübertragungsplatte (4) anliegt und eine entgegengesetzte obere Seite (30) der Dichtung (6) an der zweiten Wärmeübertragungsplatte (8) anliegt, und einen Vorsprung (34, 36a), der von einer Außenseite (40) der Dichtung (6) vorsteht, wobei der Vorsprung (34, 36a) ein Außenteil (44, 46) mit einer Längenerstreckung umfasst und so angeordnet ist, dass er sich außerhalb der ersten und zweiten Wärmeübertragungsplatte (4, 8) erstreckt, und ein erstes Verbindungsteil (48, 50), das die Dichtung (6) und das Außenteil (44, 46) des Vorsprungs (34, 36a) miteinander verbindet, **dadurch gekennzeichnet, dass** sie ferner ein RFID-Tag (60) umfasst, welches zumindest teilweise in mindestens dem Außenteil (44, 46) des Vorsprungs (34, 36a) eingebettet ist.

2. Dichtungsanordnung (2) nach Anspruch 1, wobei die Längenerstreckung des Außenteils (44, 46) des Vorsprungs (34, 36a) im Wesentlichen parallel zu einer Längenerstreckung des RFID-Tags (60) ist.

3. Dichtungsanordnung (2) nach einem der vorhergehenden Ansprüche, wobei die Längenerstreckung des Außenteils (44, 46) des Vorsprungs (34, 36a) im Wesentlichen parallel zu einer Längenerstreckung der Dichtung (6) am ersten Verbindungsteil (48, 50) ist.

4. Dichtungsanordnung (2) nach einem der vorhergehenden Ansprüche, wobei eine Längenerstreckung des ersten Verbindungsteils (48, 50) des Vorsprungs (34, 36a) im Wesentlichen senkrecht zu der Längenerstreckung des Außenteils (44, 46) des Vorsprungs (34, 36a) ist.

5. Dichtungsanordnung (2) nach einem der vorhergehenden Ansprüche, wobei sich das erste Verbindungsteil (48) zwischen der Dichtung (6) und einem Zwischenabschnitt (C) des Außenteils (44) des Vorsprungs (34) erstreckt.

6. Dichtungsanordnung (2) nach einem der vorhergehenden Ansprüche, wobei der Vorsprung (36a) ferner einen ersten Finger (54) umfasst, der sich von dem Außenteil (46) des Vorsprungs (36a) zu der Dichtung (6) hin erstreckt, wobei das erste Verbindungsteil (50) und der erste Finger (54) des Vorsprungs (36a) so angeordnet sind, dass sie mit entgegengesetzten Seiten (12, 14) der ersten Wärmeübertragungsplatte (4) in Eingriff kommen, um die Dichtung (6) an der ersten Wärmeübertragungsplatte (4) zu befestigen.

7. Dichtungsanordnung (2) nach einem der vorhergehenden Ansprüche, wobei die Dichtung (6) einen ersten Öffnungsdichtungsabschnitt (6a), der so angeordnet ist, dass er sich um eine erste Öffnung (16a) der ersten Wärmeübertragungsplatte (4) erstreckt, einen zweiten Öffnungsdichtungsabschnitt (6b), der so angeordnet ist, dass er sich um eine zweite Öffnung (16b) der ersten Wärmeübertragungsplatte (4) erstreckt, einen ringförmigen Dichtungsabschnitt (6e), von dem eine Innenseite (32) so angeordnet ist, dass sie einen Fluidstromkanal zwischen der ersten und der zweiten Wärmeübertragungsplatte (4, 8) definiert, mindestens einen ersten Verknüpfungsdichtungsabschnitt (6f), der den ersten Öffnungsdichtungsabschnitt (6a) und den ringförmigen Dichtungsabschnitt (6e) verbindet, und mindestens einen zweiten Verknüpfungsdichtungsabschnitt (6g), der den zweiten Öffnungsdichtungsabschnitt (6b) und den ringförmigen Dichtungsabschnitt (6e) verbindet, umfasst, wobei der Vorsprung (34, 36a) von einem äußeren (6f') des mindestens einen ersten Verknüpfungsdichtungsabschnitt (6f) vorsteht.

8. Dichtungsanordnung (2) nach einem der Ansprüche 1 bis 6, wobei die Dichtung (6) einen ersten Öffnungsdichtungsabschnitt (6a) umfasst, der so angeordnet ist, dass er sich um eine erste Öffnung (16a) der ersten Wärmeübertragungsplatte (4) erstreckt, wobei der Vorsprung (34, 36a) von der Außenseite (40) des ersten Öffnungsdichtungsabschnitts (6a) vorsteht.

9. Dichtungsanordnung (2) nach einem der Ansprüche 1 bis 6, wobei die Dichtung (6) einen ringförmigen Dichtungsabschnitt (6e) umfasst, von dem eine Innenseite (32) so angeordnet ist, dass sie einen Fluidstromkanal zwischen der ersten und der zweiten Wärmeübertragungsplatte (4, 8) definiert, wobei der Vorsprung (34, 36a) von der Außenseite (40) des ringförmigen Dichtungsabschnitts (6e) vorsteht.

10. Verfahren zum Herstellen einer Dichtungsanordnung (2) für einen Plattenwärmetauscher, wobei die Dichtungsanordnung (2) eine Dichtung (6) und einen Vorsprung (34, 36a) einschließt, der von einer Außenseite (40) der Dichtung (6) vorsteht, umfassend
Bereitstellen der Dichtung (6) aus einem elastomeren ersten Material,
Bereitstellen des Vorsprungs (34, 36a) aus einem zweiten Material und
dauerhaftes Zusammenfügen der Dichtung (6) und des Vorsprungs (34, 36a),
**dadurch gekennzeichnet, dass** es ferner Folgendes umfasst:
Bereitstellen eines RFID-Tags (60), der zumindest teilweise in den Vorsprung (34, 36a) eingeformt ist.

11. Verfahren nach Anspruch 10, wobei der Schritt des Bereitstellens der Dichtung (6) Folgendes umfasst:
Bereitstellen einer Form, umfassend einen Dichtungsabschnitt zum Formen der Dichtung (6) der Dichtungsanordnung (2),
Anordnen mindestens eines Rohlings aus dem elastomeren ersten Material in dem Dichtungsabschnitt der Form,
und
Aufbringen von Wärme auf die Form, um die Dichtung (6) und das Zusammenfügen der Dichtung (6) und des Vorsprungs (34, 36a) zu erreichen.

12. Verfahren nach Anspruch 10, wobei die Schritte des Bereitstellens der Dichtung (6) und des Vorsprungs (34, 36a) Folgendes umfassen:
Bereitstellen einer Form, umfassend einen Dichtungsabschnitt zum Formen der Dichtung (6) der Dichtungsanordnung (2), und einen Vorsprungabschnitt, der von einer Außenseite des Dichtungsabschnitts vorsteht, um den Vorsprung (34, 36a) der Dichtungsanordnung (2) zu formen,
Anordnen des RFID-Tags (60) in dem Vorsprungteil der Form,
Anordnen mindestens eines Rohlings aus dem elastomeren ersten Material in dem Dichtungsabschnitt der Form und mindestens eines Rohlings aus dem zweiten Material in dem Vorsprungabschnitt der Form, und
Aufbringen von Wärme auf die Form, um die Dichtung (6), den Vorsprung (34, 36a), den RFID-Tag (60), der zumindest teilweise in den Vorsprung (34, 36a) eingeformt ist, und das Zusammenfügen der Dichtung (6) und des Vorsprungs (34, 36a) zu erreichen.

13. Verfahren nach einem der Ansprüche 10 bis 12, wobei es sich bei dem elastomeren ersten Material und dem zweiten Material um das gleiche Material handelt.

14. Aufbau (5), umfassend eine erste Wärmeübertragungsplatte (4) und eine Dichtungsanordnung (2) nach einem der Ansprüche 1 bis 9, wobei die erste Wärmeübertragungsplatte (4) eine Nut (18) umfasst, die die Dichtung (6) aufnimmt, und sich das Außenteil (44, 46) des Vorsprungs (34, 36a) nach außerhalb der ersten Wärmeübertragungsplatte (4) erstreckt.

## Revendications

1. Agencement de joint (2) pour un échangeur de chaleur à plaques comprenant un joint (6), qui est agencé pour être positionné entre des première et seconde plaques de transfert de chaleur (4, 8) alignées de l'échangeur de chaleur à plaques avec un côté inférieur (28) du joint (6) jouxtant la première plaque de transfert de chaleur (4) et un côté supérieur (30) opposé du joint (6) jouxtant la seconde plaque de transfert de chaleur (8), et une saillie (34, 36a) faisant saillie depuis un extérieur (40) du joint (6), laquelle saillie (34, 36a) comprend une partie externe (44, 46) présentant une extension en longueur et étant agencée pour s'étendre à l'extérieur des première et seconde plaques de transfert de chaleur (4, 8), et une première partie de raccordement (48, 50), raccordant le joint (6) et la partie externe (44, 46) de la saillie (34, 36a), **caractérisé en ce qu'**il comprend en outre une étiquette RFID (60) qui est incorporée au moins partiellement dans au moins ladite partie externe (44, 46) de la saillie (34, 36a).

2. Agencement de joint (2) selon la revendication 1, dans lequel l'extension en longueur de la partie externe (44, 46) de la saillie (34, 36a) est essentiellement parallèle à une extension en longueur de ladite étiquette RFID (60).

3. Agencement de joint (2) selon l'une quelconque des revendications précédentes, dans lequel l'extension en longueur de la partie externe (44, 46) de la saillie (34, 36a) est essentiellement parallèle à une extension en longueur du joint (6) au niveau de la première partie de raccordement (48, 50).

4. Agencement de joint (2) selon l'une quelconque des revendications précédentes, dans lequel une extension en longueur de la première partie de raccordement (48, 50) de la saillie (34, 36a) est essentiellement perpendiculaire à l'extension en longueur de la partie externe (44, 46) de la saillie (34, 36a).

5. Agencement de joint (2) selon l'une quelconque des revendications précédentes, dans lequel la première partie de raccordement (48) s'étend entre le joint (6) et une section intermédiaire (C) de la partie externe (44) de la saillie (34).

6. Agencement de joint (2) selon l'une quelconque des revendications précédentes, dans lequel la saillie (36a) comprend en outre un premier doigt (54) s'étendant depuis la partie externe (46) de la saillie (36a) vers le joint (6), dans lequel la première partie de raccordement (50) et le premier doigt (54) de la saillie (36a) sont agencés pour se mettre en prise avec des côtés opposés (12, 14) de la première plaque de transfert de chaleur (4) pour fixer le joint (6) à la première plaque de transfert de chaleur (4).

7. Agencement de joint (2) selon l'une quelconque des revendications précédentes, dans lequel le joint (6) comprend une première section de joint d'orifice (6a) agencée pour s'étendre autour d'un premier orifice (16a) de la première plaque de transfert de chaleur (4), une seconde section de joint d'orifice (6b) agencée pour s'étendre autour d'un second orifice (16b) de la première plaque de transfert de chaleur (4), une section de joint annulaire (6e) dont un intérieur (32) est agencé pour définir un canal d'écoulement de fluide entre les première et seconde plaques de transfert de chaleur (4, 8), au moins une première section de joint de liaison (6f) raccordant la première section de joint d'orifice (6a) et la section de joint annulaire (6e), et au moins une deuxième section de joint de liaison (6g) raccordant la deuxième section de joint d'orifice (6b) et la section de joint annulaire (6e), dans lequel la saillie (34, 36) fait saillie depuis une extérieure (6f') de ladite au moins une première section de joint de liaison (6f).

8. Agencement de joint (2) selon l'une quelconque des revendications 1 à 6, dans lequel le joint (6) comprend une première section de joint d'orifice (6a) agencée pour s'étendre autour d'un premier orifice (16a) de la première plaque de transfert de chaleur (4), dans lequel la saillie (34, 36a) fait saillie depuis l'extérieur (40) de la première section de joint d'orifice (6a).

9. Agencement de joint (2) selon l'une quelconque des revendications 1 à 6, dans lequel le joint (6) comprend une section de joint annulaire (6e) dont un intérieur (32) est agencé pour définir un canal d'écoulement de fluide entre les première et seconde plaques de transfert de chaleur (4, 8), dans lequel la saillie (34, 36a) fait saillie depuis l'extérieur (40) de la section de joint annulaire (6e).

10. Procédé de fabrication d'un agencement de joint (2) pour un échangeur de chaleur à plaques, lequel agencement de joint (2) inclut un joint (6) et une saillie (34, 36a) faisant saillie depuis un extérieur (40) du joint (6), comprenant
la fourniture du joint (6) réalisé en un premier matériau élastomère,
la fourniture de la saillie (34, 36a) réalisée en un second matériau, et
l'assemblage permanent du joint (6) et de la saillie (34, 36a),
**caractérisé en ce qu'**il comprend en outre
la fourniture d'une étiquette RFID (60) moulée au moins partiellement dans la saillie (34, 36a).

11. Procédé selon la revendication 10, dans lequel l'étape consistant à fournir le joint (6) comprend
la fourniture d'un moule comprenant une section de joint pour mouler le joint (6) de l'agencement de joint (2),
l'agencement d'au moins une ébauche du premier matériau élastomère dans la section de joint du moule,
et
l'application de chaleur sur le moule pour obtenir le joint (6) et ledit assemblage du joint (6) et de la saillie (34, 36a).

12. Procédé selon la revendication 10, dans lequel les étapes de fourniture du joint (6) et de la saillie (34, 36a) comprennent
la fourniture d'un moule comprenant une section de joint pour mouler le joint (6) de l'agencement de joint (2), et une section de saillie faisant saillie depuis un extérieur de la section de joint pour mouler la saillie (34, 36a) de l'agencement de joint (2),
l'agencement de l'étiquette RFID (60) dans la partie saillie du moule,
l'agencement d'au moins une ébauche du premier matériau élastomère dans la section de joint du moule, et d'au moins une ébauche du second matériau dans la section de saillie du moule, et
l'application de chaleur sur le moule pour obtenir le joint (6), la saillie (34, 36a), l'étiquette RFID (60) moulée au moins partiellement dans la saillie (34, 36a), et ledit assemblage du joint (6) et de la saillie (34, 36a).

13. Procédé selon l'une quelconque des revendications 10 à 12, dans lequel le premier matériau élastomère et le second matériau élastomère sont le même matériau.

14. Ensemble (5) comprenant une première plaque de transfert de chaleur (4) et un agencement de joint (2) selon l'une quelconque des revendications 1 à 9, dans lequel la première plaque de transfert de chaleur (4) comprend une rainure (18) logeant le joint (6) et la partie externe (44, 46) de la saillie (34, 36a) s'étend à l'extérieur de la première plaque de transfert de chaleur (4).
